# EUROPEAN PATENT SPECIFICATION

(11) **EP 2 216 581 B1**
(45) Date of publication and mention of the grant of the patent: **07.03.2012**
(21) Application number: 10151302.6
(22) Date of filing: 21.01.2010
(51) Int. Cl.: F16L 59/02

(54) **Mechanism for closing a pipe section for insulation purposes and its manufacturing method**
Mechanismus zum Schließen eines Röhrenabschnitts zu Isolationszwecken und Herstellungsverfahren dafür
Mécanisme de fermeture d'une section de tuyau pour les besoins d'isolation et son procédé de fabrication

(30) Priority: 09.02.2009 FI 20095123
(43) Date of publication of application: 11.08.2010
(73) Proprietor: Paroc Oy Ab, 00621 Helsinki (FI)
(72) Inventor: Hjelt, Tuomo, 53850 Lappeenranta (FI)
(74) Representative: LEITZINGER OY

(56) References cited:
- DE-A1- 1 611 923
- DE-U1- 29 706 323
- US-A- 3 833 456
- US-A1- 2004 088 939

## Description

### Object of the invention

The invention relates to a closing mechanism of a flap of a coating, the flap being intended for covering and at the same time for closing a split in a pipe section for insulation purposes (also referred to as "pipe section") made of mineral wool and provided with the coating.

The invention relates also to a manufacturing method for the above-mentioned closing mechanism.

### Prior art

A pipe section features a split in longitudinal direction for installation. The installation is followed by covering the split with an unsupported longitudinal flap of the pipe section coating. The flap of a pipe section coating is traditionally secured by means of an adhesive tape. The securing mechanism is established by selecting and cutting a double-sided band tape in a size appropriate for the flap. Protective paper on one face of the band tape is removed and the band tape is bonded to the attachment with the flap. The other face of the band tape is still left with protective paper. On a pipe section installation site, after fitting the pipe section in place, the other protective paper of the band tape is removed, followed by bonding the flap to the attachment with the underlying coating.

The adhesive tapes used in pipe sections are generally tapes based on acrylate, rubber or hot-setting adhesives. The amount of adhesive tape needed for the attachment is about 100 g/m². Rubber-based adhesive tape burns easily, whereby the adhesive tape, and prior to installation the protective paper as well, provide an increase in fire load. Acrylic based adhesive tapes do not burn as easily, but due to the fairly large amounts of material required, also these somewhat increase the fire load. In addition, the material costs increase as the tape requires "extra" protective paper.

Such a pipe section is e.g. shown in DE 29706323U1 Doc.

### Description of the invention

It is an objective of the invention to solve the above-described problem and to provide a securing mechanism for the unsupported flap of a pipe section coating, which is more attractive in terms of costs and reduced in terms of fire load.

The closing mechanism according to the invention is characterized in that at least part of the mineral wool facing side of the flap of the coating of the pipe section is provided with an adhesive, on top of which an unsupported longitudinal fringe portion of the flap has been folded for protection, whereby, after installing the pipe section, the flap has its fold openable and the pipe section has its split coverable and at the same time closable by securing the flap by means of the adhesive thereon to the underlying coating layer.

Preferred embodiments of the closing mechanism of the invention are presented in the dependent claims 2-5.

On the other hand, the closing mechanism manufacturing method according to the invention is characterized in that at least part of the mineral wool facing side of the pipe section coating flap is provided with an adhesive, on top of which an unsupported longitudinal fringe portion of the flap is folded for protection.

The invention enables reducing the fire load by using just an adhesive instead of an adhesive tape. The amount of an adhesive needed for the attachment is considerably less, even less than 1/3 of the amount of an adhesive tape, and there is also no need for protective papers, thus the material costs and the fire load are clearly reduced.

### Detailed description of the invention

The invention will now be described by way of example with reference to the accompanying drawings, in which:
fig. 1 shows in cross-section a pipe section, the unsupported flap of whose coating is secured according to the prior art by means of a double-sided adhesive tape, and
fig. 2 shows in cross-section a pipe section, the unsupported flap of whose coating is secured by means of a pressure sensitive adhesive.

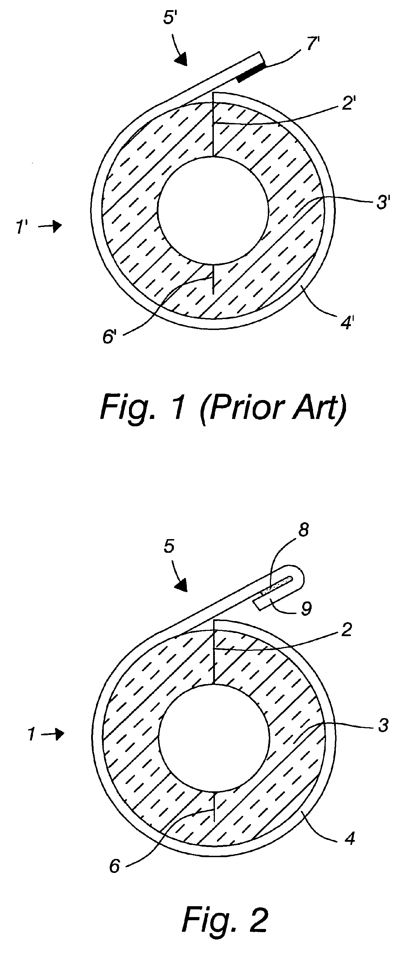

A pipe section 1' made of stone wool, depicted in fig. 1 and included in the prior art, is provided, for its installation, with a longitudinal split 2' running in the stone wool layer 3' from end to end of the pipe section. The pipe section 1' has the outer surface of its substantially tubular stone wool layer 3' provided with a coating 4' (e.g. aluminum foil). The coating 4' is applied to the external cylindrical main surface of the stone wool layer to substantially cover this entire mentioned external surface in such a way that, on one side of the split 2', it extends to the flushness with a plane established by that perpendicular gable section of the split tubular stone wool layer 3' to which it is secured, and on the other side of the split 2', it in turn extends in the form of an unsupported flap 5' (another possible term is a skirt), protruding from or near the edge of the stone wool layer's 3' perpendicular split 2' and extending lengthwise from end to end of the pipe section. In the mineral wool layer 3', on its inside, is a longitudinal internal slit 6' extending from end to end of the pipe section.

After the prior known pipe section 1' has been installed around a pipe, the split 2' is covered by the unsupported flap 5' of the pipe section coating 4' by first stripping off the protective paper of a double-sided adhesive tape 7' and by then pressing the unsupported coating flap 5' to the attachment with the underlying coating 4' over on the other side of the split 2'.

In the case of a pipe section 1 according to the invention, as depicted in fig. 2, a pipe section coating 4 has its unsupported flap 5 provided, more or less in the middle with respect of its width, with about 30 g/m² of an adhesive 8, preferably a so-called pressure sensitive adhesive, in a uniform "stripe", on top of which an outer or longitudinally unsupported fringe zone of the coating flap is folded for a protection similar to what is offered by protective paper.

After installing the pipe section 1 of the invention, a folded portion or fold 9 of the flap 5 is opened and the flap is secured by means of the adhesive 8 by pressing the flap 5 to the attachment with the underlying coating 4 over on the other side of a split 2.

The adhesive 8 of the invention, such as e.g. a pressure sensitive adhesive, makes a strong bond with the coating 4 of the pipe section 1, said coating consisting of aluminum foil. A condition for the functionality of a closing mechanism according to the invention is that the adhesive 8 not lose its bonding capacity after a single or at least a few opening times of the fold, but that the fold can be readily opened and closed for several, even dozens or hundreds of times, such that the adhesive is still afterwards strongly bondable to the coating 4 of the pipe section 1. This quality brings along the advantage that, in the process of repairing a pipe, the pipe section around it is readily openable and closable without tools, or without an adhesive tape or the like material required for the re-closing and re-sealing of e.g. the split 2.

The pressure sensitive adhesives appropriate for several opening and closing times include e.g. various acrylate dispersion adhesives, and specifically the type of acrylate dispersion adhesives with a viscosity of 100-400 mPas and a density of 1.00-1.10 kg/dm³/20°C. One acrylate dispersion adhesive of this type is an acrylate dispersion adhesive produced by Kiilto Oy under the trade name "SITOL 1000".

## Claims

1. A pipe section for insulating purposes (1', 1) made of mineral wool, provided with a split (2', 2) and a coating (4', 4) consisting of aluminum foil, said coating having a flap (5', 5) being intended for covering and at the same time for closing said split (2', 2), **characterized in that** at least part of the mineral wool (3) facing side of the flap (5) of the coating (4) consisting of aluminum foil is provided with a so-called pressure sensitive adhesive (8), on top of which an unsupported longitudinal fringe portion (9) of the flap (5) has been folded for protection, whereby, after installing the pipe section (1), the flap (5) has its fold (9) openable and the pipe section has its split (2) coverable and at the same time closable by securing the flap (5) by means of the adhesive thereon to the underlying coating layer (4).

2. A pipe section according to claim 1, wherein the adhesive (8) is an acrylate dispersion adhesive.

3. A pipe section according to claim 2, wherein the acrylate dispersion adhesive has a viscosity of 100-400 mPas and a density of 1.00-1.10 kg/dm³/20°C.

4. A pipe section according to any one of the claims 1-3, wherein the adhesive (8) is present in an amount of about 20-30 g/m².

5. A pipe section according to any one of the preceding claims, wherein the adhesive is provided along the entire length of the flap more or less in the middle with respect of its width in the form of a uniform adhesive stripe.

6. A method for manufacturing a pipe section for insulating purposes (1', 1) made of mineral wool, provided with a split (2', 2) and a coating (4', 4) consisting of aluminum foil, said coating having a flap (5', 5) being intended for covering and at the same time for closing said split (2', 2), **characterized in that** at least part of the mineral wool facing side of the flap of the pipe section coating consisting of aluminum foil is provided with a so-called pressure sensitive adhesive (8), on top of which an unsupported longitudinal fringe portion (9) of the flap (5) is folded for protection.

7. A method according to claim 6, **characterized in that** the adhesive is provided along the entire length of the flap more or less in the middle with respect of its width in the form of a uniform adhesive stripe.

## Patentansprüche

1. Rohrabschnitt für Isolationszwecke (1', 1), der aus Mineralwolle hergestellt ist und mit einem Schlitz (2', 2) und einer Beschichtung (4', 4), die aus Aluminiumfolie besteht, ausgestattet ist, wobei die Beschichtung eine Lasche (5', 5) aufweist, die dafür bestimmt ist, den Schlitz (2', 2) abzudecken und gleichzeitig zu verschließen, **dadurch gekennzeichnet, dass** mindestens ein Teil der Seite der Lasche (5) der aus Aluminiumfolie bestehenden Beschichtung (4), die der Mineralwolle (3) zugewandt ist, mit einem sogenannten Haftklebstoff (8) ausgestattet ist, auf den ein ungestützter längs verlaufender Randabschnitt (9) der Lasche (5) zum Schutz umgefaltet ist, wodurch nach der Installation des Rohrabschnitts (1) der Falz (9) der Lasche (5) geöffnet werden kann und der Schlitz (2) des Rohrabschnittes abgedeckt und gleichzeitig verschlossen werden kann, indem die Lasche (5) mit Hilfe des Klebstoffes daran an der darunterliegenden Beschichtung (4) befestigt wird.

2. Rohrabschnitt nach Anspruch 1, wobei der Klebstoff (8) ein Acrylatdispersionsklebstoff ist.

3. Rohrabschnitt nach Anspruch 2, wobei der Acrylatdispersionsklebstoff eine Viskosität von 100 bis 400 mPas und eine Dichte von 1,00 bis 1,10 kg/dm³/20 °C aufweist.

4. Rohrabschnitt nach einem der Ansprüche 1 bis 3, wobei der Klebstoff (8) in einer Menge von etwa 20 bis 30 g/m² vorhanden ist.

5. Rohrabschnitt nach einem der vorhergehenden Ansprüche, wobei der Klebstoff in Form eines gleichmäßigen Klebstoffstreifens über die gesamte Länge der Lasche und in Bezug auf deren Breite mehr oder weniger in der Mitte bereitgestellt ist.

6. Verfahren zur Herstellung eines Rohrabschnittes für Isolationszwecke (1', 1), der aus Mineralwolle hergestellt wird und mit einem Schlitz (2', 2) und einer Beschichtung (4', 4), die aus Aluminiumfolie besteht, ausgestattet wird, wobei die Beschichtung eine Lasche (5', 5) aufweist, die dafür bestimmt ist, den Schlitz (2', 2) abzudecken und gleichzeitig zu verschließen, **dadurch gekennzeichnet, dass** mindestens ein Teil der Seite der Lasche der aus Aluminiumfolie bestehenden Beschichtung, die der Mineralwolle zugewandt ist, mit einem sogenannten Haftklebstoff (8) ausgestattet wird, auf den ein ungestützter längs verlaufender Randabschnitt (9) der Lasche (5) zum Schutz umgefaltet wird

7. Verfahren nach Anspruch 6, **dadurch gekennzeichnet, dass** der Klebstoff in Form eines gleichmäßigen Klebstoffstreifens über die gesamte Länge der Lasche und in Bezug auf deren Breite mehr oder weniger in der Mitte bereitgestellt wird.

## Revendications

1. Section de tuyau dans un but isolant (1', 1) en laine minérale, dotée d'une fente (2', 2) et d'un revêtement (4', 4) constitué d'une feuille d'aluminium, ledit revêtement comprenant un rabat (5', 5) destiné à recouvrir et en même temps à fermer ladite fente (2', 2), **caractérisée en ce qu'**au moins une partie de la laine minérale (3) faisant face à un côté du rabat (5) du revêtement (4) constitué d'une feuille d'aluminium est munie d'un adhésif autocollant (8), au-dessus duquel une partie bordure longitudinale non supportée (9) du rabat (5) a été pliée à des fins de protection, où après l'installation de la section de tuyau (1), la pliure (9) du rabat (5) est dépliée et la fente (2) de la section de tuyau est recouverte et en même temps fermée en fixant le rabat (5) par le biais de l'adhésif sur la couche de revêtement sous-jacente (4) .

2. Section de tuyau selon la revendication 1, dans laquelle l'adhésif (8) est un adhésif à base de dispersion d'acrylate.

3. Section de tuyau selon la revendication 2, dans laquelle l'adhésif à base de dispersion d'acrylate a une viscosité de 100 à 400 mPas et une densité de 1,00 à 1,10 kg/dm³/20 °C.

4. Section de tuyau selon l'une quelconque des revendications 1 à 3, dans laquelle l'adhésif (8) est présent en une quantité d'environ 20 à 30 g/m².

5. Section de tuyau selon l'une quelconque des revendications précédentes, dans laquelle l'adhésif est placé sur toute la longueur du rabat plus ou moins au milieu par rapport à sa largeur sous la forme d'une bande adhésive uniforme.

6. Procédé de préparation d'une section de tuyau dans un but isolant (1', 1) en laine minérale, dotée d'une fente (2', 2) et d'un revêtement (4', 4) constitué d'une feuille d'aluminium, ledit revêtement comprenant un rabat (5', 5) destiné à recouvrir et en même temps à fermer ladite fente (2', 2), **caractérisé en ce qu'**au moins une partie de la laine minérale faisant face à un côté du rabat du revêtement de la section de tuyau constitué d'une feuille d'aluminium est munie d'un adhésif autocollant (8), au-dessus duquel une partie bordure longitudinale non supportée (9) du rabat (5) a été pliée à des fins de protection.

7. Procédé selon la revendication 6, **caractérisé en ce que** l'adhésif est placé sur toute la longueur du rabat plus ou moins au milieu par rapport à sa largeur sous la forme d'une bande adhésive uniforme.
